# EUROPEAN PATENT APPLICATION

(11) **EP 4 290 196 A1**
(43) Date of publication of application: **13.12.2023**
(21) Application number: 22178177.6
(22) Date of filing: 09.06.2022
(51) Int. Cl.: G01H 3/12, G01M 7/00

(54) **VIBRATION MONITORING SYSTEM AND METHOD**

(71) Applicant: Rosemount Tank Radar AB, 435 23 Mölnlycke (SE)
(72) Inventor: PREISIG, Nicolas, 444 95 ÖDSMÅL (SE); DELIN, Håkan, 585 93 LINKÖPING (SE); WIDAHL, Christoffer, 426 70 VÄSTRA FRÖLUNDA (SE)
(74) Representative: Kransell & Wennborg KB

(57) **Abstract**

A vibration monitoring system comprising a measurement unit and processing circuitry coupled to the measurement unit and an imaging unit, and configured to: acquire, from the measurement unit, vibration data for each target in the plurality of targets; acquire, from an imaging unit, an image of a scene including each target in the plurality of targets; determine a vibration monitoring data structure; and provide the vibration monitoring data structure to a remote device, allowing display at the remote device of a visual representation of the scene including each target in the plurality of targets, and a representation of the vibration data for each target in the plurality of targets.

## Description

### Technical Field of the Invention

The present invention relates to a vibration monitoring system and method.

### Technical Background

Vibration monitoring of various installations, such as pipes or various machinery is used to obtain indications of the state of a process or the installations themselves.

For vibration monitoring, it is known to use accelerometers attached to targets to be monitored.

To overcome drawbacks of installations with permanently mounted accelerometers, it has been proposed in US 2011/0288796 to use one or more radar-based displacement sensors to gather vibration information from an operating machine. According to US 2011/0288796, the radar-based displacement sensor may be steered or directed toward multiple regions of interest on the operating machine to gather vibration information from the multiple regions of interest.

It would be desirable to provide for improved vibration monitoring, in particular allowing an improved user experience of the vibration monitoring.

### Summary of the Invention

In view of the above, a general object of the present invention is thus to provide for improved vibration monitoring, in particular allowing an improved user experience of the vibration monitoring.

According to a first aspect of the present invention, it is therefore provided a vibration monitoring system, for remote monitoring of vibration of each target in a plurality of targets, the vibration monitoring system comprising: a measurement unit configured to perform contactless measurement of vibration of each target in the plurality of targets; and processing circuitry coupled to the measurement unit and an imaging unit, and configured to: acquire, from the measurement unit, vibration data for each target in the plurality of targets; acquire, from the imaging unit, an image of a scene including each target in the plurality of targets; determine a vibration monitoring data structure based on a target position of each target in the plurality of targets, the vibration data for each target in the plurality of targets, the image, and a coordinate transformation between a coordinate system of the scene, in which the target position of each target in the plurality of targets is defined, and a coordinate system of the image; and provide the vibration monitoring data structure to a remote device, allowing display at the remote device of a visual representation of the scene including each target in the plurality of targets, and a representation of the vibration data for each target in the plurality of targets.

The present invention is based on the realization that a correlation between an image of the monitored scene and vibration data for targets in the scene can be used to display a visual representation of the scene at a remote location, where the visual representation includes each target and a representation of the vibration data for each target.

Hereby, a user or operator can get an overview of the scene, as well as an indication of the vibration status of each of a plurality of targets in the scene from a remote and safe location. This provides for improved monitoring of the status of an installation, which may be beneficial for safety as well as for optimization of any process performed at the installation.

According to embodiments, the vibration monitoring system may comprise the imaging unit; the imaging unit may be in a fixed positional arrangement in relation to the measurement unit; and the coordinate transformation may be predefined and stored in memory included in the vibration monitoring system.

This configuration of the vibration monitoring system may facilitate installation, since the will be no need to perform the coordinate transformation after installation. Furthermore, the user may be able to see, for example during setup of the vibration monitoring system, an image of the scene within which the measurement unit is capable of performing contactless measurement of vibration.

According to various embodiments, furthermore, the processing circuitry of the vibration monitoring system may be configured to receive, from the remote device, a signal indicating a request for remote monitoring of vibration of an additional target at an additional target position in the scene; acquire, from the measurement unit, vibration data for the additional target; determine an expanded vibration monitoring data structure additionally based on the vibration data for the additional target; and provide the expanded vibration monitoring data structure to the remote device. Hereby, new targets to monitor can be added remotely and intuitively.

According to embodiments, the additional target and/or other potential additional targets may be checked for viability of vibration measurement following the request for monitoring. Alternatively, or in combination, potential targets may be pre-qualified, and a visual indication of accessible targets, where reliable vibration monitoring can be performed, may be displayed to the user.

According to embodiments, the measurement unit may advantageously comprise a transceiver for generating, transmitting and receiving electromagnetic signals; an antenna arrangement coupled to the transceiver for radiating at least one electromagnetic transmit signal generated by the transceiver towards each target in the plurality of targets, and for returning electromagnetic reflection signals resulting from reflection of the at least one transmit signal at each target in the plurality of targets back towards the transceiver; and processing circuitry coupled to the transceiver and configured to determine the vibration data for each target in the plurality of targets based on a timing relation between the at least one transmit signal and the reflection signals.

To preserve energy, the measurement unit may be configured to only radiate the at least one transmit signal towards each target in the plurality of targets, and not to positions between the selected targets.

According to embodiments, the transceiver of the measurement unit may be configured to form a plurality of measurement signals, each measurement signal in the plurality of measurement signals being based on the at least one transmit signal and the reflection signal resulting from reflection at a respective target in the plurality of targets, the measurement signal being indicative of at least a phase difference between the at least one transmit signal and the reflection signal; and the processing circuitry may be configured to determine the vibration data for each target position in the plurality of target positions based on the measurement signal in the plurality of measurement signals corresponding to the target position.

Analysis of the phase difference between the reflection signal and the transmit signal can provide considerably higher accuracy (in the order of 10 µm or better for typical frequency ranges and measurement sweep configurations) than analysis of the frequency difference between the reflection signal and the transmit signal (in the order of 1 mm for typical frequency ranges and measurement sweep configurations).

For this measurement technique, CW (continuous wave) or FMCW (frequency modulated continuous wave) radar systems may be used. Such radar systems are, *per se*, well-known to one of ordinary skill in the art.

In conventional contactless filling level determination systems using FMCW-techniques, phase information is generally not used because the relation between the phase information and distance is not unambiguous for typical distance ranges.

The present inventors have now found that the more accurate phase difference measurement can yield unambiguous measurement results for the vibration monitoring system according to embodiments of the present invention, due to the much smaller measurement range required.

According to a second aspect of the present invention, it is provided a method of remote vibration monitoring, comprising the steps of: acquiring, from a measurement unit configured to perform contactless vibration measurements, vibration data for each target in a plurality of targets; acquiring, from an imaging unit, an image of a scene including each target in the plurality of targets; determining a vibration monitoring data structure based on a target position of each target in the plurality of targets, the vibration data for each target in the plurality of targets, the image, and a coordinate transformation between a coordinate system of the scene, in which the target position of each target in the plurality of targets is defined, and a coordinate system of the image; and providing the vibration monitoring data structure to a remote device, allowing display at the remote device of a visual representation of the scene including each target in the plurality of targets, and a representation of the vibration data for each target in the plurality of targets.

In summary, the present invention thus relates to a vibration monitoring system comprising a measurement unit and processing circuitry coupled to the measurement unit and an imaging unit, and configured to: acquire, from the measurement unit, vibration data for each target in the plurality of targets; acquire, from an imaging unit, an image of a scene including each target in the plurality of targets; determine a vibration monitoring data structure; and provide the vibration monitoring data structure to a remote device, allowing display at the remote device of a visual representation of the scene including each target in the plurality of targets, and a representation of the vibration data for each target in the plurality of targets.

### Brief Description of the Drawings

These and other aspects of the present invention will now be described in more detail, with reference to the appended drawings, wherein:
Fig 1 schematically shows an example embodiment of the vibration monitoring system according to the present invention;
Fig 2 is a schematic block diagram of an example configuration of the vibration monitoring system in fig 1;
Fig 3 is a flowchart illustrating a first example embodiment of the method according to the present invention;
Fig 4 schematically illustrates steps in the flow-chart of fig 3;
Figs 5A-B is an illustration of an exemplary coordinate transformation between the scene and the image;
Fig 6 is a flowchart illustrating a second example embodiment of the method according to the present invention; and
Fig 7 schematically illustrates steps in the flow-chart of fig 6.

### Detailed Description of Example Embodiments of the Invention

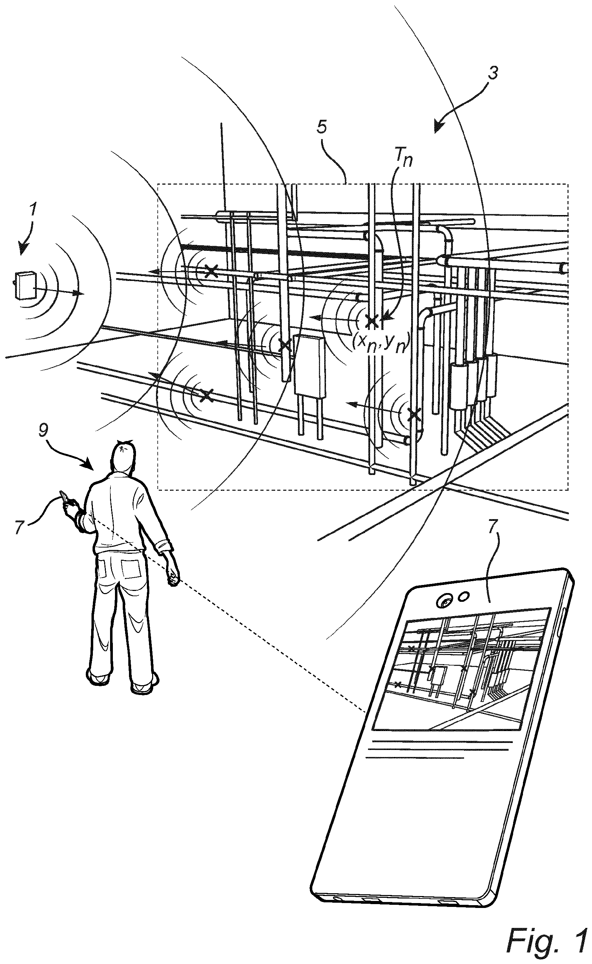

Fig 1 schematically shows an example embodiment of the vibration monitoring system 1 according to the present invention arranged for remote monitoring of vibration in the exemplary setting of a process facility 3, which may, for example, be a factory for manufacturing chemicals. It should be understood that the exemplary setting of fig 1 represents one example only of various possible and beneficial uses of embodiments of the vibration monitoring system according to the present invention. Other examples include, for example, vibration monitoring of machinery, buildings, structures, etc. Nevertheless, the process facility 3 in fig 1 may serve as an illustrative example of a setting where the contactless vibration measurement and remote monitoring provided by the vibration monitoring system according to embodiments of the present invention may be particularly beneficial.

Referring to fig 1, vibration of each target Tₙ in a plurality of targets in a scene 5 is monitored remotely, using contactless measurement. As is schematically indicated in fig 1, a vibration monitoring data structure is provided to a remote device 7, to allow display to a user 9 of a visual representation of the scene 5, including the targets Tₙ and a representation of vibration data for each target Tₙ.

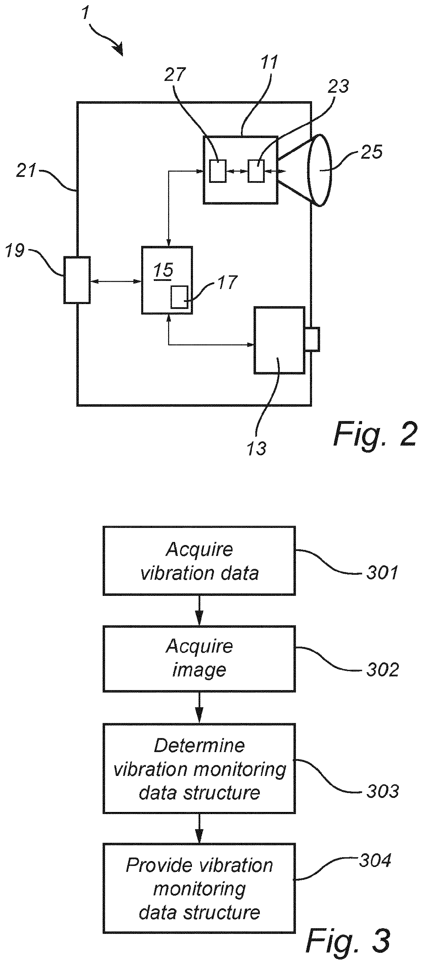

Fig 2 is a schematic block diagram of an example configuration of the vibration monitoring system 1 in fig 1. In this example configuration, the vibration monitoring system 1 comprises a measurement unit 11, an imaging unit 13, processing circuitry 15 including non-volatile memory 17, an interface 19, and a housing 21.

As is schematically indicated in fig 2, the vibration monitoring system 1 may thus comprise an imaging unit 13, and the imaging unit 13 may be in a fixed positional arrangement in relation to the measurement unit 11. Information about a relation between the monitored scene 5 and an image captured by the imaging unit 13 may be stored in the memory 17, which is here exemplified as being included in the processing circuitry 15. This information may include a coordinate transformation between a coordinate system of the scene 5 and a coordinate system of the image. This configuration is expected to be user-friendly, with a simple and straightforward setup procedure, and it is also beneficial that the measurement unit 11 and the imaging unit 13 "see" the same scene 5 if the vibration monitoring system 1 is moved and/or if it is desired to monitor vibration of another scene.

It should, however, be noted that the imaging unit 13 need not necessarily be included in the vibration monitoring system 1. Also, even if included in the vibration monitoring system 1, the imaging unit 13 need not be in a fixed positional arrangement in relation to the measurement unit 11 or enclosed in the same housing 21 as the measurement unit 11. Since live images may generally not be needed, it may be sufficient to take an image during setup of the vibration monitoring system 1, for example. A coordinate transformation between the coordinate system of the scene 5 and the coordinate system of the image can then be determined using *per se* known image processing techniques.

Furthermore, although fig 2 indicates that the vibration monitoring system 1 comprises processing circuitry 15 arranged inside the same housing 21 as the measurement unit 11 and the imaging unit 13, it should be understood that the processing circuitry 15 of the vibration monitoring system 1 need not be co-located with the measurement unit 11, but that part of, or all, the processing required may take place at another location or may be distributed. For example, processing may take place in the cloud and/or in the remote device 7.

As is schematically indicated in fig 2, the measurement unit 11 may comprise a transceiver 23, an antenna arrangement 25, and a measurement processor 27. The transceiver 23 may be configured to generate, transmit, and receive electromagnetic signals, preferably with a carrier frequency higher than 40 GHz, such as higher than 70 GHz. The antenna arrangement 25, here exemplified as a lens antenna for high frequencies, is coupled to the transceiver 23 for radiating at least one electromagnetic transmit signal S_{T} (referring to fig 1) generated by the transceiver 23 towards each target Tₙ in the plurality of targets and for receiving and returning to the transceiver 23 electromagnetic reflection signals S_{R,n} resulting from reflection of the at least one transmit signal S_{T} at each target Tₙ. The measurement processor 27 is coupled to the transceiver 23 and configured to determine vibration data Vₙ for each target Tₙ based on a timing relation between the at least one transmit signal S_{T} and the reflection signals S_{R,n}.

The vibration data may, for example, be based on an amplitude and frequency spectrum of changes over time of distances between the measurement unit 11 and each target Tₙ. For the required fast and accurate distance measurements, the above-described radar-based measurement unit 11 may advantageously be implemented using a so-called monolithic microwave integrated circuit (MMIC) for realizing the transceiver 23. Furthermore, phase-based processing may be used, rather than frequency-based processing.

For example, the transmit signal S_{T} and the reflection signal S_{R,n} from reflection of the transmit signal S_{T} at a target Tₙ may first be combined to form the so-called intermediate frequency signal S_{IF}, using techniques that are *per se* well-known in the art of FMCW-type radar level gauge systems.

Thereafter, a phase Φ of the intermediate frequency signal S_{IF} may be determined. According to embodiments of the invention, this may be done by transforming the intermediate frequency signal S_{IF} to the frequency domain, for example using FFT, identifying the frequency corresponding to reflection at the particular target Tₙ, and determining the phase Φ of the intermediate frequency signal S_{IF} for this frequency. For the small changes in distance resulting from vibration, the change of the phase can be used to unambiguously determine the change in distance with high accuracy.

A single transmit signal S_{T} with a wide lobe may be transmitted towards the entire scene 5, and the reflection signals S_{R,n} resulting from reflection of the transmit signal S_{T} at the individual targets Tₙ may be evaluated. Alternatively, the radar-based measurement unit 11 may be provided with a transceiver 23 and an antenna arrangement 25 that allows transmission of one transmit signal S_{T,n} for each individual target Tₙ. Such a targeted transmit signal may have a narrow lobe, an allows for more efficient use of the radiated energy. In particular, only pre-selected targets Tₙ need to be radiated with microwave energy. An antenna arrangement 25 that allows transmission of one transmit signal S_{T,n} for each individual target Tₙ may, for example, comprise a plurality of individual antennas and/or one or more antennas - for example patch antennas - with steerable lobes.

Although a radar-based measurement unit 11, such as that described above, may be advantageous for many applications, such as involving hot or cold surfaces or hazy or smoky environments, it should be noted that the vibration monitoring system 1 according to the present invention is not limited to any particular contactless measurement technique, and that it is foreseen that, for example, a laser-based measurement unit may be included in the vibration monitoring system 1 according to embodiments of the invention.

The schematic illustration in fig 1 indicates contactless measurement of vibration of each target Tₙ from a single viewpoint. This setup allows measurement of the vibration along a straight line between the single viewpoint (that may be represented by the base of the arrow at the vibration monitoring system 1 in fig 1) and each target Tₙ. By configuring the measurement unit comprised in the vibration monitoring system 1 to perform contactless measurement of vibration of each target Tₙ from additional viewpoints, vibration in additional directions can be measured and added to the vibration monitoring data structure. For instance, one additional viewpoint may be displaced in the vertical direction in fig 1 and one additional viewpoint may be displaced in a horizontal direction that is different from (such as substantially perpendicular to) the above-mentioned straight line. For example the second additional viewpoint may be displaced along the wall in fig 1. This configuration will allow determination of vibration of each target Tₙ in any direction.

In addition to being configured to perform contactless measurement of vibration of each target Tₙ, the measurement unit 11 may be configured to perform contactless measurement of a distance to each target Tₙ in the plurality of targets; and the processing circuitry 15 may be configured to acquire, from the measurement unit 11, distance data for each target Tₙ in the plurality of targets; determine, based on the distance data, deformation data for each target Tₙ in the plurality of targets; and provide the deformation data for at least one target Tₙ in the plurality of targets to the remote device 7. This will allow the user to not only get information about vibration, but additionally about deformation that may occur. For improved accuracy of the deformation data, the processing circuitry 15 may optionally be configured to acquire distance data indicative of the distance to at least one reference target, such as a reflector arranged on a wall or other structure, which can be expected not to be deformed or displaced.

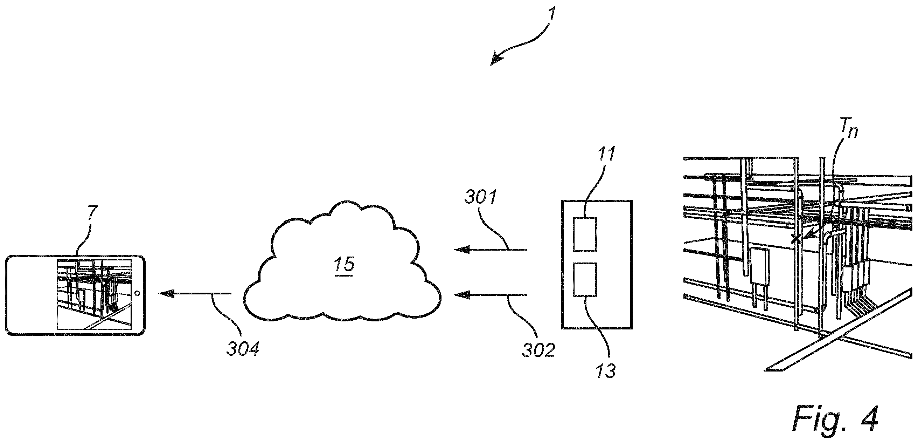

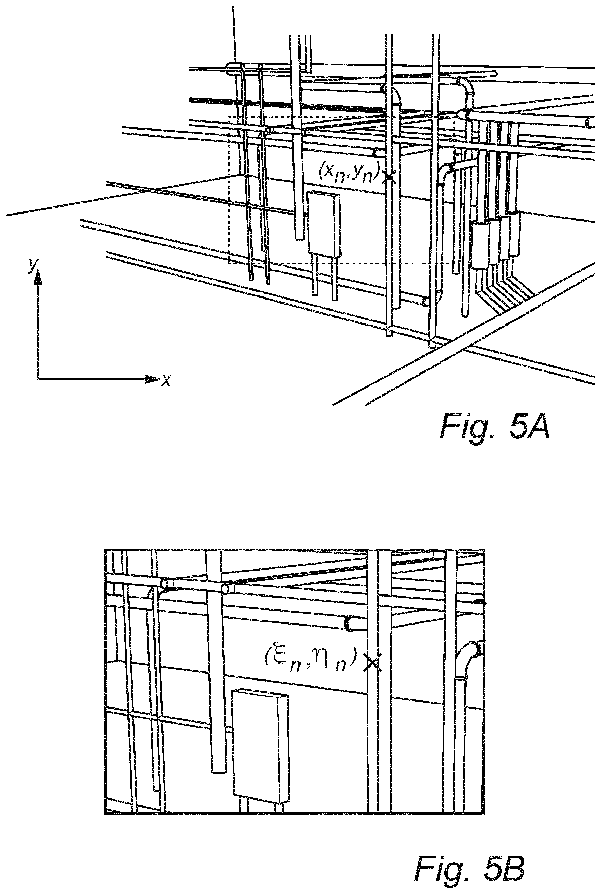

A first example embodiment of the method according to the present invention will now be described with reference to the flow-chart in fig 3, with additional reference to fig 4 and figs 5A-B, as well as to fig 1 and fig 2 referred to above. Fig 4 is a schematic illustration of an embodiment of the vibration monitoring system 1 of the invention, which mainly differs from that in fig 1 in that the processing circuitry 15 is provided as a cloud-solution, so that processing takes place remotely.

In a first step 301, vibration data is acquired, by the processing circuitry 15 from a measurement unit 11 configured to perform contactless vibration measurements. Referring to fig 1, the acquired vibration data is for each target Tₙ in the plurality of targets in the scene 5.

In a second step 302, which can take place before, after or at the same time as the first step 301, an image is acquired, by the processing circuitry 15 from an imaging unit 13 arranged to capture images of the scene 5 including each target Tₙ in the plurality of targets.

Thereafter, in step 303, a vibration monitoring data structure is determined. Additionally referring to figs 5A-B, the vibration monitoring data structure is based on a target position (xₙ, yₙ) of each target Tₙ in the plurality of targets, the above-mentioned vibration data Vₙ for each target Tₙ in the plurality of targets, the image of the scene 5, and a coordinate transformation between a coordinate system of the scene 5 (see fig 5A), in which the target position (xₙ, yₙ) of each target Tn is defined, and a coordinate system of the image (see fig 5B).

Turning briefly to figs 5A-B, fig 5A illustrates a coordinate system of the scene 5 in the process facility 3, and fig 5B illustrates a coordinate system of the image of the scene 5. As is schematically shown in fig 5A, each target Tₙ has a corresponding coordinate (xₙ, yₙ). Since the scene 5 is three-dimensional, each target Tₙ actually has a position in space (xₙ, yₙ, zₙ), but due to the two-dimensional nature of the image, the coordinate transformation is between a two-dimensional projection of the scene 5 and the image. The third dimension - the depth - may advantageously be used to enhance the capability of the measurement unit to distinguish between targets Tₙ. In particular a radar-based measurement unit 11 such as described above can conveniently distinguish between reflection signals resulting from reflection at different targets based on different distances between the measurement unit 11 and the targets.

Referring now to fig 5B, the coordinates (xₙ, yₙ) of the targets Tₙ in the scene 5 have been transformed to corresponding coordinates (ξₙ, ηₙ) in the coordinate system of the image. This coordinate transformation may, for instance, take the form of a coordinate transformation matrix, as is well-known to those skilled in the relevant art.

As was mentioned further above, the application of the coordinate transformation, to transform the target coordinates (xₙ, yₙ) to the corresponding image coordinates (ξₙ, ηₙ) may, for example, take place at the measurement site (as shown in fig 1), in the cloud (as shown in fig 4), or at the remote device 7.

In the final step 304 of the method in fig 3, the vibration monitoring data structure is provided to the remote device 7, to allow display at the remote device 7 of a visual representation of the scene 5, including each target Tₙ and a representation of the vibration data Vₙ for each target Tₙ. In this context it should be noted that the vibration monitoring data structure may be provided at one time as one data set. Alternatively, the vibration monitoring data structure may be provided as several partial data sets, at different points in time.

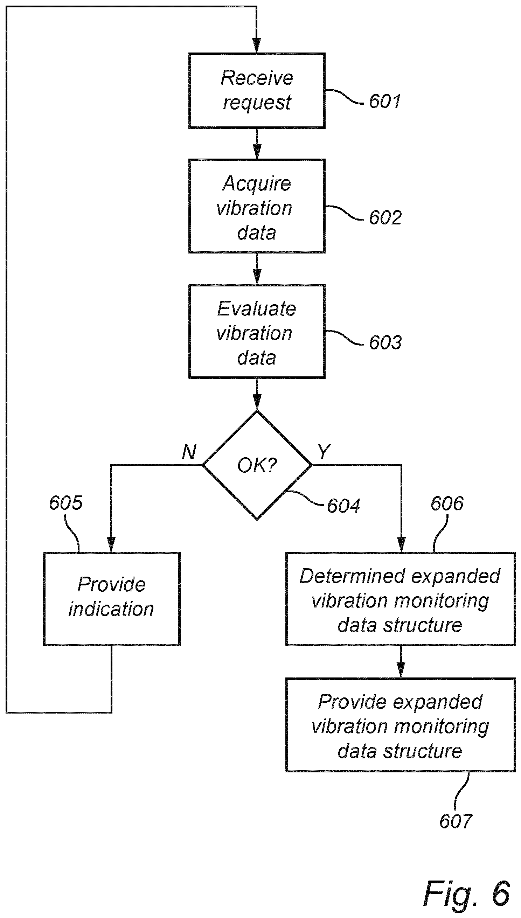

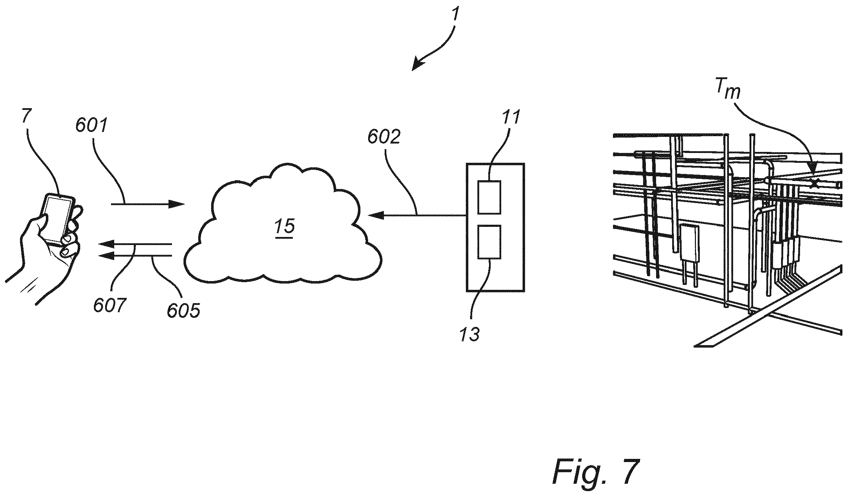

A second example embodiment of the method according to the present invention will now be described with reference to the flow-chart in fig 6, with additional reference to fig 7, as well as to fig 1 and fig 2 referred to above. Fig 7 is a schematic illustration of an embodiment of the vibration monitoring system 1 of the invention, which mainly differs from that in fig 1 in that the processing circuitry 15 is provided as a cloud-solution, so that processing takes place remotely.

In a first step 601, a request is received, by the processing circuitry 15, from the remote device 7 for remote monitoring of vibration of an additional target Tₘ at an additional target position (xₘ, yₘ) in the scene 5. The request may specify the target position in terms of coordinates (ξₘ, ηₘ) in the image coordinate system, and coordinate transformation may be performed by the processing circuitry 15. The request may, for example, be initiated by the user 9 selecting a location in the image of the scene 5 displayed at the remote device 7.

In the subsequent step 602, the processing circuitry 15 acquires, from the measurement unit 11, vibration data Vₘ for the additional target position Tm. It should be noted that the term "vibration data" as used herein encompasses any data that may be used to provide information about the vibration of a given target. Accordingly, the vibration data may convey information about a position in space of the target Tₘ, a signal amplitude, a signal frequency distribution, etc.

Following the acquisition of the vibration data Vₘ for the additional target Tₘ, the vibration data Vₘ may optionally be evaluated, in step 603. The evaluation may be in view of at least one predefined criterion relating to signal strength and/or spatial separation in relation to vibration data for at least one other target Tₙ in the plurality of targets. For the case of radar-based vibration measurement, the spatial separation may be in the three-dimensional space of the scene 5, so that targets that appear very close to each other in the image can be separated due to their separation in the depth dimension (z).

If it is determined in step 604 that the result of the evaluation of step 603 was that the vibration data for the additional target Tₘ failed to fulfil the at least one predefined criterion (N), an indication is provided in step 605, by the processing circuitry 15 to the remote device 7, that remote monitoring of vibration of the additional target Tₘ cannot be performed. This conclusion may be arrived at, by the processing circuitry 15, if, for example, the amplitude of signals reflected by the additional target Tₘ is lower than a predefined threshold amplitude and/or if it is determined that a distance in space between the additional target Tₘ and the closest one of the existing targets is shorter than a predefined threshold distance.

Following an indication that the additional target Tₘ was not successfully qualified, the user 9 may request monitoring of another target, as is schematically indicated in fig 6.

If it is instead determined in step 604 that the result of the evaluation of step 603 was that the vibration data for the additional target Tₘ fulfilled the at least one predefined criterion (Y), an expanded vibration monitoring data structure is determined in step 606, by the processing circuitry. The expanded vibration monitoring data structure is additionally based on the vibration data Vₘ for the additional target Tₘ.

Finally, the expanded vibration monitoring data structure is provided to the remote device 7 for display of the additional target in the representation of the scene 5.

The person skilled in the art realizes that the present invention by no means is limited to the preferred embodiments described above. On the contrary, many modifications and variations are possible within the scope of the appended claims. For instance, the transmit signal could be a pulsed signal.

## Claims

1. A vibration monitoring system, for remote monitoring of vibration of each target in a plurality of targets, the vibration monitoring system comprising:
a measurement unit configured to perform contactless measurement of vibration of each target in the plurality of targets; and
processing circuitry coupled to the measurement unit and an imaging unit, and configured to:
acquire, from the measurement unit, vibration data for each target in the plurality of targets;
acquire, from the imaging unit, an image of a scene including each target in the plurality of targets;
determine a vibration monitoring data structure based on a target position of each target in the plurality of targets, the vibration data for each target in the plurality of targets, the image, and a coordinate transformation between a coordinate system of the scene, in which the target position of each target in the plurality of targets is defined, and a coordinate system of the image; and
provide the vibration monitoring data structure to a remote device, allowing display at the remote device of a visual representation of the scene including each target in the plurality of targets, and a representation of the vibration data for each target in the plurality of targets.

2. The vibration monitoring system according to claim 1, wherein:
the vibration monitoring system comprises the imaging unit;
the imaging unit is in a fixed positional arrangement in relation to the measurement unit; and
the coordinate transformation is predefined and stored in memory included in the vibration monitoring system.

3. The vibration monitoring system according to claim 1 or 2, wherein the processing circuitry is configured to:
receive, from the remote device, a signal indicating a request for remote monitoring of vibration of an additional target at an additional target position in the scene;
acquire, from the measurement unit, vibration data for the additional target;
determine an expanded vibration monitoring data structure additionally based on the vibration data for the additional target; and
provide the expanded vibration monitoring data structure to the remote device.

4. The vibration monitoring system according to claim 3, wherein the processing unit is configured to:
evaluate the vibration data for the additional target in view of at least one predefined criterion relating to signal strength and/or spatial separation in relation to vibration data for at least one other target in the plurality of targets; and
provide to the remote device, when the vibration data for the additional target fails to fulfil the at least one predefined criterion, an indication that remote monitoring of vibration of the additional target cannot be performed.

5. The vibration monitoring system according to any one of claims 1 to 3, wherein the processing unit is configured to:
acquire, from the measurement unit, vibration data for each potential additional target in a plurality of potential additional targets;
evaluate vibration data for each potential additional target in the plurality of potential additional targets in view of at least one predefined criterion relating to signal strength and/or spatial separation in relation to vibration data for at least one other target in the plurality of targets or at least one other potential additional target in the plurality of potential additional targets; and
determine the vibration monitoring data structure additionally based on the evaluation of the vibration data for each potential additional target in the plurality of potential additional targets, to allow display at the remote device of a visual representation of an availability for selection of the potential additional targets.

6. The vibration monitoring system according to any one of the preceding claims, wherein the measurement unit comprises:
a transceiver for generating, transmitting and receiving electromagnetic signals;
an antenna arrangement coupled to the transceiver for radiating at least one electromagnetic transmit signal generated by the transceiver towards each target in the plurality of targets, and for returning electromagnetic reflection signals resulting from reflection of the at least one transmit signal at each target in the plurality of targets back towards the transceiver; and
processing circuitry coupled to the transceiver and configured to determine the vibration data for each target in the plurality of targets based on a timing relation between the at least one transmit signal and the reflection signals.

7. The vibration monitoring system according to claim 6, wherein the measurement unit is configured to only radiate the at least one transmit signal towards each target in the plurality of targets.

8. The vibration monitoring system according to claim 6 or 7, wherein the transceiver of the measurement unit is configured to form a plurality of measurement signals, each measurement signal in the plurality of measurement signals being based on the at least one transmit signal and the reflection signal resulting from reflection at a respective target in the plurality of targets, the measurement signal being indicative of at least a phase difference between the at least one transmit signal and the reflection signal; and
the processing circuitry is configured to determine the vibration data for each target position in the plurality of target positions based on the measurement signal in the plurality of measurement signals corresponding to the target position.

9. The vibration monitoring system according to any one of the preceding claims, wherein:
the measurement unit is configured to perform contactless measurement of vibration of each target in the plurality of targets from each of a plurality of spatially separated viewpoints; and
the vibration data acquired from the measurement unit by the processing circuitry is indicative of vibration of each target in any direction.

10. The vibration monitoring system according to any one of the preceding claims, wherein:
the measurement unit is configured to perform contactless measurement of a distance to each target in the plurality of targets; and
the processing circuitry is configured to:
acquire, from the measurement unit, distance data for each target in the plurality of targets;
determine, based on the distance data, deformation data for each target in the plurality of targets; and
provide the deformation data for at least one target in the plurality of targets to the remote device.

11. A method of remote vibration monitoring, comprising the steps of:
acquiring, from a measurement unit configured to perform contactless vibration measurements, vibration data for each target in a plurality of targets;
acquiring, from an imaging unit, an image of a scene including each target in the plurality of targets;
determining a vibration monitoring data structure based on a target position of each target in the plurality of targets, the vibration data for each target in the plurality of targets, the image, and a coordinate transformation between a coordinate system of the scene, in which the target position of each target in the plurality of targets is defined, and a coordinate system of the image; and
providing the vibration monitoring data structure to a remote device, allowing display at the remote device of a visual representation of the scene including each target in the plurality of targets, and a representation of the vibration data for each target in the plurality of targets.

12. The method according to claim 11, further comprising the steps of:
receiving, from the remote device, a request for remote monitoring of vibration of an additional target at an additional target position in the scene;
acquiring, from the measurement unit, vibration data for the additional target;
determining an expanded vibration monitoring data structure additionally based on the vibration data for the additional target; and
providing the expanded vibration monitoring data structure to the remote device.

13. The method according to claim 12, further comprising the steps of:
evaluating the vibration data for the additional target in view of at least one predefined criterion relating to signal strength and/or spatial separation in relation to vibration data for at least one other target in the plurality of targets; and
providing to the remote device, when the vibration data for the additional target fails to fulfil the at least one predefined criterion, an indication that remote monitoring of vibration of the additional target cannot be performed.

14. The method according to any one of claims 11 to 13, wherein:
the measurement unit is configured to perform contactless measurement of vibration of each target in the plurality of targets from each of a plurality of spatially separated viewpoints; and
the vibration data acquired from the measurement unit is indicative of vibration of each target in any direction.

15. The method according to any one of claims 11 to 14, wherein:
the measurement unit is configured to perform contactless measurement of a distance to each target in the plurality of targets; and
the method comprises the steps of:
acquiring, from the measurement unit, distance data for each target in the plurality of targets;
determining, based on the distance data, deformation data for each target in the plurality of targets; and
providing the deformation data for at least one target in the plurality of targets to the remote device.
